Europäisches Patentamt

European Patent Office

Office européen des brevets

(19)

(11) **EP 0 937 265 B1**

(12) **FASCICULE DE BREVET EUROPEEN**

(45) Date de publication et mention
de la délivrance du brevet:
**28.04.2004 Bulletin 2004/18**

(21) Numéro de dépôt: **97913282.6**

(22) Date de dépôt: **07.11.1997**

(51) Int Cl.⁷: **G01T 1/164**

(86) Numéro de dépôt international:
**PCT/FR1997/002010**

(87) Numéro de publication internationale:
**WO 1998/021607 (22.05.1998 Gazette 1998/20)**

(54) **DISPOSITIF ET PROCEDE DE TRAITEMENT DE SIGNAUX D'UN ENSEMBLE DE PHOTODETECTEURS DE GAMMA-CAMERA**

VORRICHTUNG UND VERFAHREN ZUR SIGNALVERARBEITUNG DER PHOTODETEKTORANORDNUNG EINER GAMMAKAMERA

SIGNAL PROCESSING DEVICE AND METHOD FOR A SET OF PHOTODETECTORS OF A GAMMA-CAMERA

(84) Etats contractants désignés:
**DE GB IT**

(30) Priorité: **08.11.1996 FR 9613669**

(43) Date de publication de la demande:
**25.08.1999 Bulletin 1999/34**

(73) Titulaire: **COMMISSARIAT A L'ENERGIE ATOMIQUE**
**75015 Paris (FR)**

(72) Inventeurs:
• **CHAPUIS, Alain**
**F-38950 Saint Martin le Vinoux (FR)**
• **JANIN, Claude**
**F-38000 Grenoble (FR)**
• **MESTAIS, Corinne**
**F-38660 La Terrasse (FR)**
• **TARARINE, Michel**
**F-92330 Sceaux (FR)**

(74) Mandataire: **Audier, Philippe André et al**
**Brevalex,**
**3, rue du Docteur Lancereaux**
**75008 Paris (FR)**

(56) Documents cités:
**EP-A- 0 166 567          EP-A- 0 265 025**
**DE-A- 3 710 745          US-A- 4 852 056**
**US-A- 4 882 495          US-A- 4 929 835**

• **PATENT ABSTRACTS OF JAPAN vol. 012, no. 411 (P-779), 31 octobre 1988 & JP 63 148186 A (RES DEV CORP OF JAPAN), 21 juin 1988,**
• **PATENT ABSTRACTS OF JAPAN vol. 013, no. 131 (P-850), 31 mars 1989 & JP 63 300986 A (RES DEV CORP OF JAPAN), 8 décembre 1988,**
• **PATENT ABSTRACTS OF JAPAN vol. 012, no. 008 (P-0654), 12 janvier 1988 & JP 62 167493 A (SHIMADZU CORP), 23 juillet 1987,**
• **PATENT ABSTRACTS OF JAPAN vol. 014, no. 272 (P-1060), 12 juin 1990 & JP 02 078988 A (HITACHI MEDICAL CORP), 19 mars 1990,**

**Description**

Domaine technique

La présente invention concerne un dispositif de détermination de la position présumée d'un événement induisant un signal, dans des photodétecteurs, cette position étant, par exemple, repérée par rapport à l'ensemble des photodétecteurs.

L'invention s'applique en particulier à la détermination de la position d'un événement à partir de signaux fournis par des photomultiplicateurs équipant une gamma-caméra, la position étant repérée par rapport aux photomultiplicateurs eux-mêmes. On entend par gamma-caméra une caméra sensible au rayonnement gamma (γ). De telles caméras sont utilisées notamment à des fins d'imagerie médicale.

Etat de la technique antérieure

A l'heure actuelle, la plupart des gamma-caméras utilisées en médecine nucléaire sont des caméras fonctionnant selon le principe des caméras de type Anger. On peut se reporter à ce sujet au document US-3 011 057.

Les gamma-caméras permettent en particulier de visualiser la répartition, dans un organe, de molécules marquées par un isotope radioactif préalablement injecté au patient.

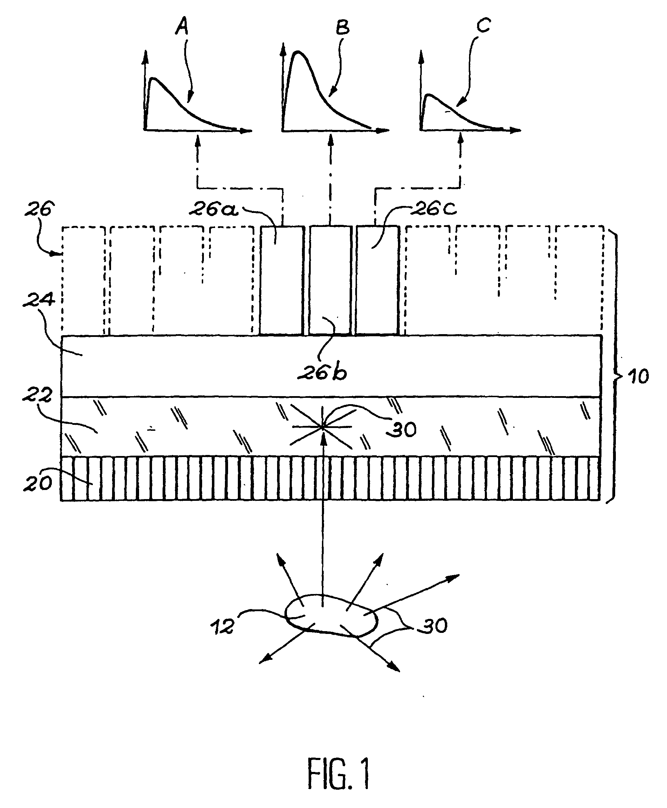

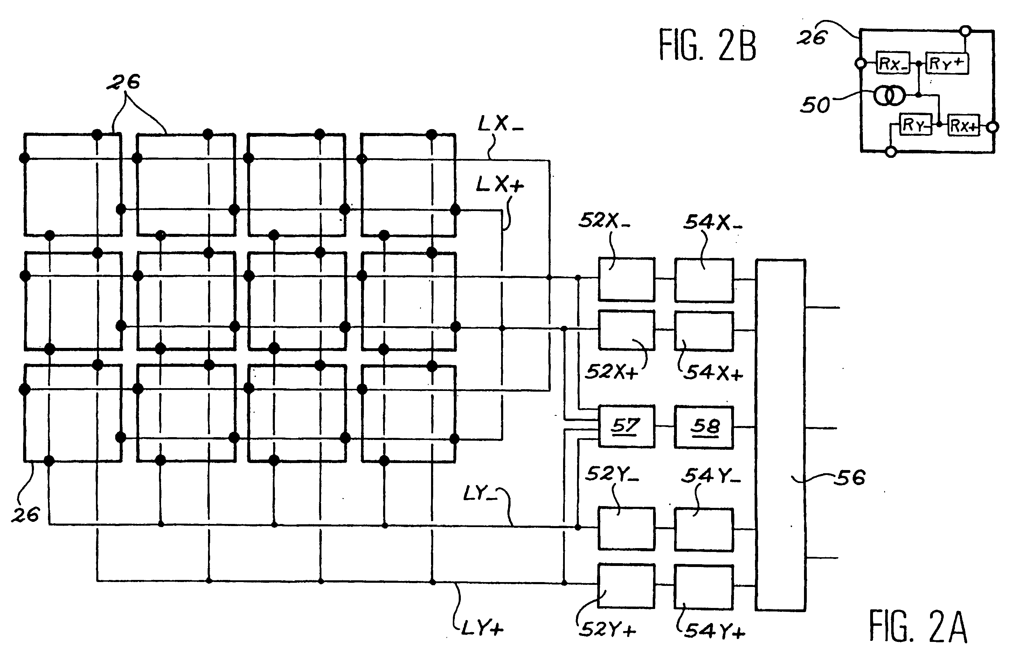

La structure et le fonctionnement d'une gamma-caméra connue sont exposés et résumés ci-après en référence aux figures 1, 2A et 2B annexées.

La figure 1 montre une tête de détection 10 d'une gamma-caméra disposée en face d'un organe 12 contenant des molécules marquées par un isotope radioactif.

La tête de détection 10 comporte un collimateur 20, un cristal scintillateur 22, un guide de lumière 24 et une pluralité de tubes photomultiplicateurs 26 juxtaposés de façon à couvrir une face du guide de lumière 24. Le scintillateur est, par exemple, un cristal de NaI(Tℓ).

Le collimateur 20 a pour fonction de sélectionner parmi tous les rayonnements gamma 30 émis par l'organe 12 ceux qui atteignent la tête de détection sensiblement sous incidence normale. Le caractère sélectif du collimateur permet d'augmenter la résolution et la netteté de l'image produite. Cependant, l'augmentation de la résolution se fait au détriment de la sensibilité. A titre d'exemple, pour environ 10000 photons γ émis par l'organe 12, un seul photon est effectivement détecté.

Les photons γ ayant traversé le collimateur atteignent le cristal scintillateur 22 où quasiment chaque photon γ est converti en une pluralité de photons lumineux. Dans la suite du texte on désigne par événement chaque interaction d'un photon gamma avec le cristal, provoquant une scintillation.

Les photomultiplicateurs 26 sont conçus pour émettre une impulsion électrique proportionnelle au nombre de photons lumineux reçus du scintillateur pour chaque événement.

Pour qu'un événement de scintillation puisse être localisé plus précisément, les photomultiplicateurs 26 ne sont pas directement accolés au cristal scintillateur 22 mais sont séparés de ce dernier par le guide de lumière 24.

Les photomultiplicateurs émettent un signal dont l'amplitude est proportionnelle à la quantité totale de lumière produite dans le scintillateur par un rayonnement gamma, c'est-à-dire proportionnelle à son énergie. Toutefois, le signal individuel de chaque photomultiplicateur dépend aussi de la distance qui le sépare du point d'interaction 30 du rayonnement gamma avec la matière du scintillateur. En effet, chaque photomultiplicateur délivre une impulsion de courant proportionnelle au flux lumineux qu'il a reçu. Dans l'exemple de la figure 1, des petits graphiques A, B, C montrent que des photomultiplicateurs 26a, 26b et 26c situés à différentes distances d'un point d'interaction 30 délivrent des signaux avec des amplitudes différentes.

La position du point d'interaction 30 d'un photon gamma est calculée dans la gamma-caméra à partir des signaux provenant de l'ensemble des photomultiplicateurs en effectuant une pondération barycentrique des contributions de chaque photomultiplicateur.

Le principe de la pondération barycentrique tel qu'il est mis en oeuvre dans les caméras de type Anger apparaît plus clairement en se reportant aux figures 2A et 2B annexées.

La figure 2A montre le câblage électrique d'une tête de détection 10 d'une gamma-caméra, qui relie cette caméra à une unité de formation d'une image. La tête de détection comporte une pluralité de photomultiplicateurs 26.

Comme le montre la figure 2B, chaque photomultiplicateur 26 de la tête de détection est associé à quatre résistances notées $RX^-$, $RX^+$, $RY^-$ et $RY^+$. Les valeurs de ces résistances sont propres à chaque photomultiplicateur et dépendent de la position du photomultiplicateur dans la tête de détection 10.

Les résistances $RX^-$, $RX^+$, $RY^-$ et $RY^+$ de chaque photomultiplicateur sont reliées à la sortie 50 dudit photomultiplicateur, représentée sur la figure 2B avec un symbole de générateur de courant. Elles sont d'autre part respectivement reliées à des lignes collectrices communes notées $LX^-$, $LX^+$, $LY^-$, $LY^+$, sur la figure 2A.

Les lignes $LX^-$, $LX^+$, $LY^-$ et $LY^+$ sont à leur tour reliées respectivement à des intégrateurs analogiques $52X^-$,

52X$^+$, 52Y$^-$, 52Y$^+$, et, par l'intermédiaire de ceux-ci à des convertisseurs analogiques/numériques 54X$^-$, 54X$^+$, 54Y$^-$, 54Y$^+$. La sortie des convertisseurs 54X$^-$, 54X$^+$, 54Y$^-$, 54Y$^+$ est dirigée vers un opérateur numérique 56. Les lignes LX$^-$, LX$^+$, LY$^-$, LY$^+$ sont par ailleurs reliées à une voie commune, dite voie énergie. Cette voie comporte également un intégrateur 57 et un convertisseur analogique/numérique 58 et sa sortie est aussi dirigée vers l'opérateur 56.

Grâce au dispositif de la figure 2, on calcule la position de l'interaction selon les équations suivantes (US-4 672 542) :

$$X = \frac{X^+ - X^-}{X^+ + X^-}$$

et

$$Y = \frac{Y^+ - Y^-}{Y^+ + Y^-}$$

dans lesquelles X et Y indiquent les coordonnées selon deux directions orthogonales de la position de l'interaction sur le cristal et dans lesquelles X$^+$, X$^-$, Y$^+$, Y$^-$ indiquent respectivement les signaux pondérés délivrés par les intégrateurs 52X$^+$, 52X$^-$, 52Y$^+$, 52Y$^-$.

Les valeurs de X et Y de même que l'énergie totale E du rayon gamma ayant interagi avec le cristal sont établies par l'opérateur numérique 56. Ces valeurs sont utilisées ensuite pour la construction d'une image comme décrit, par exemple, dans le document FR-2 669 439.

Le calcul de la position de l'interaction est entaché d'une incertitude liée aux fluctuations statistiques de Poisson du nombre de photons lumineux et du nombre de photoélectrons produits pour chaque événement, c'est-à-dire pour chaque photon gamma détecté. L'écart type de la fluctuation est d'autant plus faible que le nombre de photons ou de photoélectrons est élevé. En raison de ce phénomène, il convient de collecter la lumière le plus soigneusement possible. La résolution spatiale intrinsèque de la caméra est caractérisée par la largeur à mi-hauteur de la distribution des positions calculées pour une même source ponctuelle collimatée posée sur le cristal scintillateur.

Pour des rayons gamma d'une énergie de 140 keV, la résolution est généralement de l'ordre de 3 à 4 mm.

L'énergie d'un photon gamma détecté est calculée en faisant la somme des contributions de tous les photomultiplicateurs ayant reçu de la lumière. Elle est aussi entachée d'une fluctuation statistique. La résolution en énergie de la caméra est caractérisée par le rapport de la largeur à mi-hauteur de la distribution des énergies calculées à la valeur moyenne de la distribution, pour une même source.

La résolution en énergie est généralement de l'ordre de 9 à 11% pour des rayons gamma d'une énergie de 140 keV.

Finalement, une gamma-caméra de type Anger présente l'avantage de permettre de calculer en temps réel le barycentre des signaux des photomultiplicateurs avec des moyens très simples.

En effet, le système décrit précédemment comporte un nombre limité de composants. De plus, les résistances utilisées pour injecter le signal des photomultiplicateurs dans les lignes collectrices sont très peu coûteuses.

Une telle caméra présente cependant aussi un désavantage majeur qui est un taux de comptage réduit. On entend par taux de comptage le nombre d'événements, c'est-à-dire d'interactions entre un photon γ et le scintillateur, que la caméra est capable de traiter par unité de temps.

Une des limitations du taux de comptage provient notamment du fait que la caméra est incapable de traiter deux événements ayant lieu sensiblement simultanément en des points distincts du cristal scintillateur.

En effet, des événements simultanés mais géométriquement distincts donnent naissance à des signaux électriques qui s'empilent dans les lignes collectrices LX$^-$, LX$^+$, LY$^-$ et LY$^+$ et qui ne peuvent plus être distingués. Ces événements sont aussi "perdus" pour la formation d'une image.

La limitation du taux de comptage n'est pas une contrainte trop importante dans les techniques d'imagerie médicale traditionnelles. En effet, comme indiqué ci-dessus, le collimateur arrête un très grand nombre de rayons gamma et seul un petit nombre d'événements sont effectivement détectés.

Les gamma-caméras sont cependant utilisées également dans deux autres techniques d'imagerie médicale où la limitation du taux de comptage est une contrainte rédhibitoire.

Ces techniques sont les techniques dites de "correction d'atténuation par transmission" et de "PET (Positon Emission Tomography) en coïncidence".

La technique de correction d'atténuation par transmission consiste à tenir compte, lors de la formation d'une image médicale, de l'atténuation propre du tissu du patient entourant l'organe examiné. Pour connaître cette atténuation, on mesure la transmission des rayonnements gamma vers une gamma-caméra à travers le corps du patient. A cet effet on fait prendre place au patient entre une source externe très active et la tête de détection de la gamma-caméra. Ainsi, lors de la mesure du rayonnement transmis, un nombre élevé d'événements ont lieu dans le cristal scintillateur. Le nombre élevé d'événements par unité de temps accroît aussi la probabilité d'avoir plusieurs événements sensiblement simultanés. Une caméra de type Anger classique se révèle alors inappropriée.

La technique de PET consiste à injecter au patient un élément tel que $F^{18}$ apte à émettre des positons. L'annihilation d'un positon et d'un électron libère deux photons $\gamma$ émis dans des directions opposées et ayant une énergie de 511 keV. Ce phénomène physique est mis à profit dans la technique d'imagerie PET. Dans cette technique on utilise une gamma-caméra avec au moins deux têtes de détection disposées de part et d'autre du patient. Les têtes de détection utilisées ne sont pas équipées de collimateur. En effet, un traitement électronique des informations, dit traitement de coïncidence, permet de sélectionner parmi les événements ceux qui coïncident temporellement, et de calculer ainsi la trajectoire des photons gamma.

Les têtes de détection sont donc soumises à des flux de rayonnement gamma élevé. Les gamma-caméras classiques de type Anger ont un taux de comptage généralement trop limité pour une telle application.

A titre indicatif, une gamma-caméra de type Anger peut fonctionner normalement avec une détection de $1.10^5$ événements par seconde, tandis qu'en imagerie PET il faut au moins $1.10^6$ événements par seconde pour un fonctionnement normal.

Une autre limitation des gamma-caméras du type Anger, décrites ci-dessus, tient au fait que le calcul du barycentre d'un événement est fixé définitivement par la construction de la tête de détection et notamment par le choix des résistances $RX^-$, $RX^+$, $RY^-$, $RY^+$ pour chaque photomultiplicateur. De même, le calcul de l'énergie est fixé par le câblage des photomultiplicateurs sur une voie commune (voie énergie).

De l'art antérieur sont également connus la demande de brevet EP 0 265 025 qui divulgue une caméra à scintillation munie de moyens de repérage de la position d'un événement et le brevet US 4 852 056 qui divulgue un dispositif de localisation d'un événement par rapport à un ensemble de photodétecteurs.

Exposé de l'invention

La présente invention propose un dispositif et un procédé de traitement de signaux d'un ensemble de N photodétecteurs, autorisant un taux de comptage plus important que celui des caméras de types Anger connues. De plus, un tel dispositif (ou procédé) permet une détermination rapide d'une zone de l'ensemble des N photodétecteurs, concernée par un événement. La prise en compte d'une telle zone autorise un traitement des signaux, plus efficace que dans les dispositifs connus.

L'invention a également pour but de proposer un dispositif et un procédé qui permette un traitement plus souple des signaux reçus par un ensemble de N photomultiplicateurs ou photodétecteurs, autorisant la mise en oeuvre de divers algorithmes du calcul, et pas seulement un algorithme défini par le choix des caractéristiques des photodétecteurs, en particulier par le choix des résistances $RX^+$, $RX^-$, $RY^+$, $RY^-$ dans le cas d'une tête de gamma-caméra de l'art antérieur.

Plus précisément, l'invention a pour objet un dispositif de traitement de signaux d'un ensemble de N photodétecteurs comportant :

- des moyens, associés à chaque photodétecteur, pour produire un signal représentatif de la valeur du maximum, ou de l'énergie, d'une impulsion délivrée par le photodétecteur et numérisée ;
- des moyens, pour produire un signal de dépassement d'un seuil pour chaque photodétecteur lorsque l'amplitude du signal représentatif de la valeur du maximum, ou de l'énergie, de l'impulsion numérisée est supérieure audit seuil ;
- des moyens, communs aux photodétecteurs, pour délivrer un signal représentatif d'une position présumée d'un événement en fonction des signaux de dépassement de seuil.

Un tel dispositif traite donc des données préalablement numérisées et permet de produire un signal de position à l'aide duquel la zone du champ des photodétecteurs concernés par l'interaction, ou par l'événement, peut être repérée ou codée. Lorsqu'un événement produit un signal significatif, c'est-à-dire dont l'amplitude ou l'énergie dépasse un seuil dans plusieurs photodétecteurs, chaque signal numérisé correspondant produit un signal de dépassement de seuil. En fonction de la répartition des signaux de dépassement de seuil, un signal de position peut être émis.

Ce signal ou cette information de position pourra ensuite être, par exemple, transmise à des moyens de calcul d'une ou de plusieurs caractéristiques de l'événement. Ces moyens de calcul n'ont donc pas besoin de lire l'intégralité du champ de photodétecteurs pour déterminer la position de l'événement : celle-ci est déjà « codée » par les moyens qui permettent de délivrer un signal de position. Ils n'ont pas besoin, non plus, de tenir compte de l'ensemble des photodétecteurs pour déterminer une caractéristique de l'événement, par exemple son énergie. La lecture de tous les photodétecteurs serait longue et entraînerait une forte dégradation de la performance du taux de comptage.

Un tel dispositif permet d'éviter de figer le calcul de position de l'événement par un réseau de résistances et de câblage, comme dans les caméras d'Anger.

Lorsque plusieurs photodétecteurs sont concernés par un événement, c'est-à-dire lorsque des signaux de dépassement de seuil sont émis, correspondant à plusieurs photodétecteurs en réponse à un événement, il peut être avantageux d'obtenir une émission simultanée ou synchronisée des différents signaux de dépassement par les différents moyens de production de signal de dépassement de seuil concernés.

A cette fin et selon un mode de réalisation particulier, un dispositif selon l'invention comporte, en outre, des moyens associés à chaque photodétecteur, pour détecter la position temporelle du maximum de l'impulsion numérisée et des moyens pour la retarder d'une certaine durée de façon à la mettre en synchronisme avec le maximum de la valeur de l'intégrale correspondante.

Selon un autre aspect, un dispositif selon l'invention peut comporter, en outre :

- des moyens pour former un signal analogique total, égal à la somme des signaux analogiques délivrés par Ni photodétecteurs ($N_1 \leq N$) ;
- des moyens pour délivrer un signal représentatif de la position temporelle du maximum du signal analogique total ;
- des moyens pour retarder la délivrance du signal représentatif de la position d'un événement pendant une certaine durée à partir de la position temporelle du maximum du signal analogique total.

Ainsi, le signal de position est émis avec un certain décalage par rapport à la détection de l'événement (représenté par le signal analogique total), ce qui permet de tenir compte du temps nécessaire à la réalisation de l'intégrale par le sommateur.

On peut également réaliser la prise en compte de signaux de validation de l'événement à l'intérieur d'une fenêtre temporelle dont l'instant d'origine est fixé sur le franchissement d'un seuil. La largeur est fixée de manière à ne prendre en compte que les signaux produits pendant un certain intervalle de temps après le franchissement du seuil. Si on sait, statistiquement, qu'un événement peut induire des signaux de dépassement de seuil pendant un tel intervalle de temps, on peut ainsi éliminer des signaux parasites se produisant plus tard, en dehors dudit intervalle, et non liés à l'événement en question.

Si on souhaite, en outre, prendre en compte le principe physique selon lequel un événement ne peut activer que des photodétecteurs voisins, ou définissant une surface ou zone connexe, les moyens pour délivrer un signal de position peuvent être prévus tels qu'un signal n'est émis que si l'ensemble des signaux de dépassement de seuil produits correspondent à des photodétecteurs voisins ou connexes. On peut aussi prévoir que ces moyens ne délivrent aucun signal de position lorsque des signaux de dépassement de seuil sont émis par des photodétecteurs non voisins.

L'invention a également pour objet un dispositif de détection d'événements, comportant :

- un réseau bidimensionnel de N photodétecteurs, définissant un plan ;
- des moyens de numérisation, associés à chaque photodétecteur ;
- un dispositif, selon l'invention, tel que déjà décrit ci-dessus.

Le signal représentatif d'une position d'un événement comporte une première et une deuxième composantes, chacune correspondant à une coordonnée de l'événement repérée dans le plan du réseau de photodétecteurs.

De manière générale, quelque soit le dispositif retenu, conforme à l'invention, les moyens pour délivrer un signal représentatif d'une position d'un événement peuvent également permettre de délivrer :

- un premier signal, représentatif d'une première position, si un seul signal de dépassement de seuil est délivré, provenant d'un premier quelconque photodétecteur parmi les N photodétecteurs ;
- un second signal, représentatif d'une seconde position, si deux signaux de dépassement de seuil sont délivrés, provenant de deux photodétecteurs, voisins.

Ainsi, il est possible de repérer la position d'un événement, non seulement par rapport aux positions centrales des photodétecteurs, mais également par rapport à une position intermédiaire entre deux photodétecteurs voisins. Il est ainsi possible de distinguer entre le cas où l'interaction a lieu, plus ou moins précisément, au centre d'un photodétecteur, et le cas où l'interaction a lieu entre deux ou trois photodétecteurs. L'intérêt de pouvoir effectuer cette distinction réside dans le fait qu'on peut alors prendre en compte un environnement spécifique à chaque cas, lorsqu'on veut calculer des caractéristiques de l'événement, par exemple le barycentre du lieu où il se produit, ou bien son énergie, et ceci sans pour autant avoir besoin de considérer les réponses de tous les photodétecteurs.

L'invention a également pour objet un dispositif pour le traitement de signaux d'un ensemble de N photodétecteurs, comportant :

- N unités de codage numérique ;
- des moyens de sommation numérique associés à chaque unité de codage numérique ;
- des moyens de comparaison d'un signal de sortie des moyens de sommation avec une valeur prédéterminée ;
- deux mémoires à accès lecture, adressée par les sorties des moyens de comparaison.

Un tel dispositif permet de réaliser un dispositif de traitement de signaux d'un ensemble de N photodétecteurs, tel que déjà exposé ci-dessus. En particulier, les moyens de sommation numérique (respectivement, les moyens de détection d'un maximum) associés à chaque unité de codage numérique permettent de produire un signal représentatif de la valeur de l'énergie (respectivement, de l'amplitude) d'une impulsion numérique ; les moyens de comparaison de ce signal, avec une valeur prédéterminée, permettent de produire un signal de dépassement de seuil lorsque la valeur de l'énergie (respectivement, de l'amplitude) de l'impulsion est supérieure à la valeur prédéterminée ; la mémoire à accès lecture peut être programmée, de manière à délivrer un signal représentatif d'une position d'un événement en fonction des divers signaux de dépassement de seuil.

Un tel dispositif peut, en outre, comporter, associés à chaque unité de codage numérique :

- des moyens de détection de la position temporelle du maximum d'une impulsion numérisée, ces moyens étant commandés par l'unité de codage numérique correspondante ;
- un registre à décalage ; et
- une porte ET commandée par la sortie des moyens de comparaison et la sortie du registre à décalage.

Dans ce mode de réalisation particulier, on associe, à chaque détecteur, des moyens pour détecter la position temporelle du maximum d'une impulsion numérisée et pour retarder l'émission du signal de dépassement de seuil jusqu'à un instant à déterminer.

L'invention peut, en outre, comprendre :

- des moyens de sommation analogiques destinés à recevoir en entrée les sorties des N photodétecteurs ;
- des moyens de détection d'un maximum d'un signal analogique, commandés par les moyens de sommation analogiques ;
- un registre à décalage commandé par les moyens de détection de maximum ;
- un registre commandé par la mémoire à accès lecture et par le registre à décalage précédent.

L'invention a également pour objet un dispositif pour la détection d'événements, comportant un réseau bidimensionnel de N photodétecteurs et un dispositif de traitement de signaux de l'ensemble de N photodétecteurs, tels qu'il vient d'être décrit.

L'invention concerne également une caméra comportant un dispositif, tel que décrit ci-dessus, les photodétecteurs étant des photomultiplicateurs.

L'invention concerne également un dispositif d'imagerie en rayonnement gamma, comportant une telle caméra.

L'invention concerne également un procédé de traitement de signaux produits par un ensemble de N photodétecteurs, en réponse à un événement, ce procédé comportant :

- pour chaque photodétecteur, la production d'un signal représentatif de la valeur du maximum, ou de l'énergie, d'une impulsion délivrée par le photodétecteur et numérisée ;
- la production d'un signal de dépassement d'un seuil ($V_r$), pour chaque photodétecteur, lorsque l'amplitude du signal représentatif de la valeur du maximum, ou de l'énergie, de l'impulsion numérisée est supérieure audit seuil ;
- la formation d'un signal représentatif d'une position d'un événement en fonction des signaux de dépassement de seuil.

Un tel procédé selon l'invention est avantageusement applicable à un procédé d'imagerie en correction d'atténuation par transmission ou à un procédé d'imagerie de type PET en coïncidence. Les principes de ces procédés ont été décrits dans l'introduction à la présente demande.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1, déjà décrite, est une coupe schématique d'une tête de détection d'une caméra de type Anger connue ;
- la figure 2, déjà décrite, montre de façon schématique un dispositif de collection et de codage de signaux provenant de photomultiplicateurs de la tête de détection de la figure 1 ;
- la figure 3 représente un circuit associé à un photodétecteur, pour le traitement des données de ce photodétecteur ;
- les figures 4A et 4B représentent un signal analogique fourni par un photodétecteur (figure 4A), ainsi que le signal analogique numérisé et un chronogramme de prise d'information correspondant (figure 4B) ;
- la figure 5 représente une réalisation d'un sommateur ;
- la figure 6 représente un mode de réalisation de l'invention ;
- la figure 7 représente schématiquement un dispositif pour la détection du maximum du signal analogique ;
- la figure 8 est un chronogramme représentant schématiquement une somme des signaux analogiques d'un ensemble de photodétecteurs, l'identification du maximum de cette somme, des signaux de dépassement de seuil, l'intervalle de réponse d'une mémoire PROM et un signal de position présumée émis par la PROM ;
- les figures 9A et 9B représentent deux exemples de champs de photodétecteurs, avec des symétries différentes ;
- la figure 10 représente des positions, ou un réseau, de colonnes d'un champ de photodétecteur et des positions possibles d'événements par rapport à ce réseau de colonnes ;
- les figures 11a et 11B représentent deux exemples de zones utiles en fonction de la partie présumée.

Description détaillée de modes de réalisation de l'invention

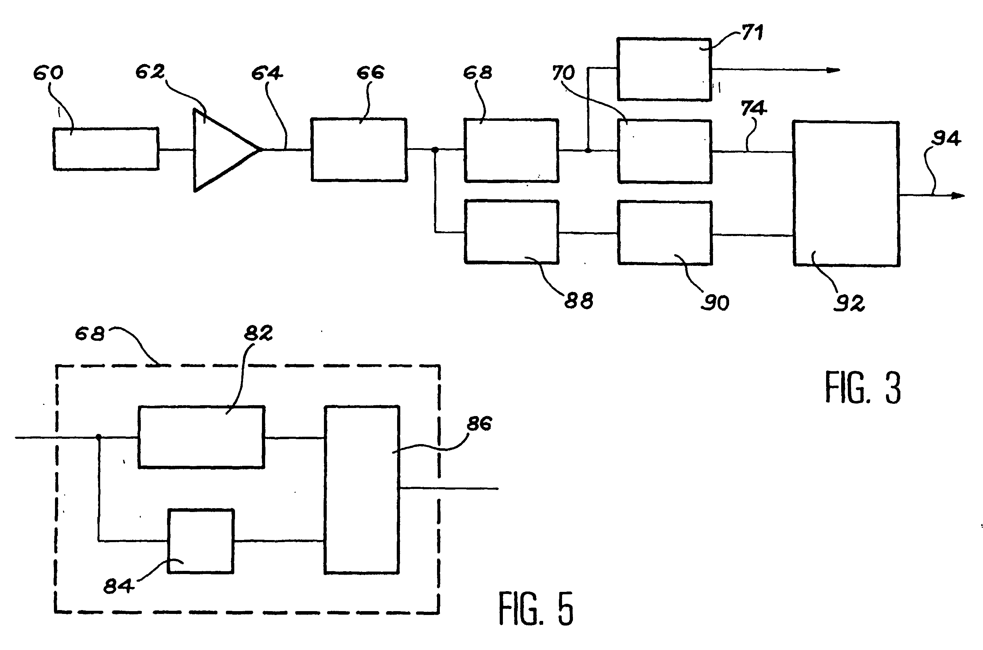

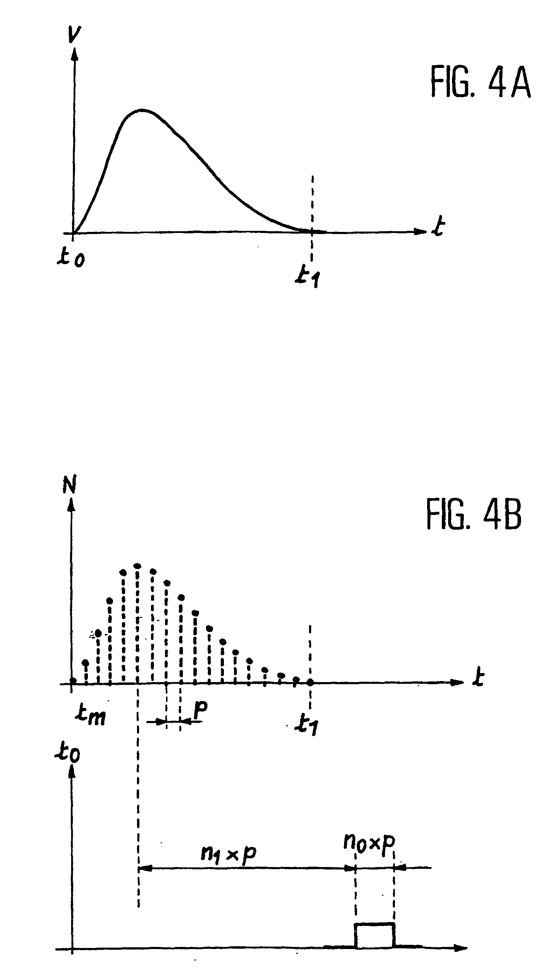

La figure 3 est une vue partielle d'un dispositif de traitement du signal selon l'invention. Elle ne représente qu'un seul canal d'un tel dispositif, c'est-à-dire la partie du dispositif associée à un unique photodétecteur 60. Le photodétecteur 60 est, par exemple, un photomultiplicateur relié à un convertisseur courant-tension 62. En réponse à un événement détecté par le photomultiplicateur, on obtient sur la sortie 64 du convertisseur courant-tension 62 un signal, par exemple, du type de celui qui est illustré sur la figure 4A.

Le graphique de la figure 4A indique, en ordonnées, l'amplitude du signal correspondant à l'impulsion et, en abscisses, le temps. L'amplitude du signal et le temps sont indiqués en échelle arbitraire. Sur la figure 4, on indique par $t_0$ l'instant de départ de l'impulsion fournie par le photodétecteur et par $t_1$ l'instant où l'impulsion redevient quasiment nulle, après être passée par un maximum. A titre indicatif, la durée correspondant à l'intervalle $t_1 - t_0$ est de l'ordre d'une microseconde, dans le cas d'un photomultiplicateur d'une gamma-caméra couplé à un cristal de NaI(Tℓ).

Le signal analogique présent sur la borne de sortie 64 est dirigé vers un convertisseur analogique-numérique 66. Ce dernier échantillonne chaque impulsion du signal en un certain nombre d'échantillons n, comme illustré sur la figure 4B. Deux échantillons consécutifs sont séparés par un pas, ou intervalle d'horloge p (l'horloge fonctionnant à 1/p Hz).

A titre d'exemple, le convertisseur échantillonne chaque impulsion du signal en n = 10 échantillons. Pour un signal de 1 microseconde, un échantillonnage est alors effectué toutes les 100 nanosecondes.

Le convertisseur analogique-numérique 66 est, de préférence, un convertisseur rapide, de type « flash » pouvant fonctionner à une fréquence de l'ordre de 10 à 20 mégahertz.

Le signal numérique issu du convertisseur analogique-numérique 66 dirigé vers un sommateur numérique 68. Ce sommateur effectue une somme glissante des échantillons qui lui sont transmis par le convertisseur analogique-numérique 66. La somme glissante est effectuée sur un nombre donné d'échantillons. Ce nombre prédéterminé est égal, par exemple, à 10.

Parallèlement, le résultat de la sommation effectuée avec les moyens 68 est stocké dans un registre 71. La fonction de stockage peut être composée de plusieurs registres pour permettre de mémoriser plusieurs événements temporellement très proches.

La valeur de la somme glissante est dirigée vers des moyens de comparaison 70. La valeur de la somme glissante y est comparée avec une valeur seuil prédéterminée fixée à une entrée 72 du comparateur 70. Ce comparateur émet sur une sortie 74 un signal binaire, représentatif du résultat de la comparaison (par exemple, 0 si la valeur de la somme glissante est inférieure à la valeur de référence fixée et 1 si la valeur de la somme glissante est supérieure à la valeur de référence).

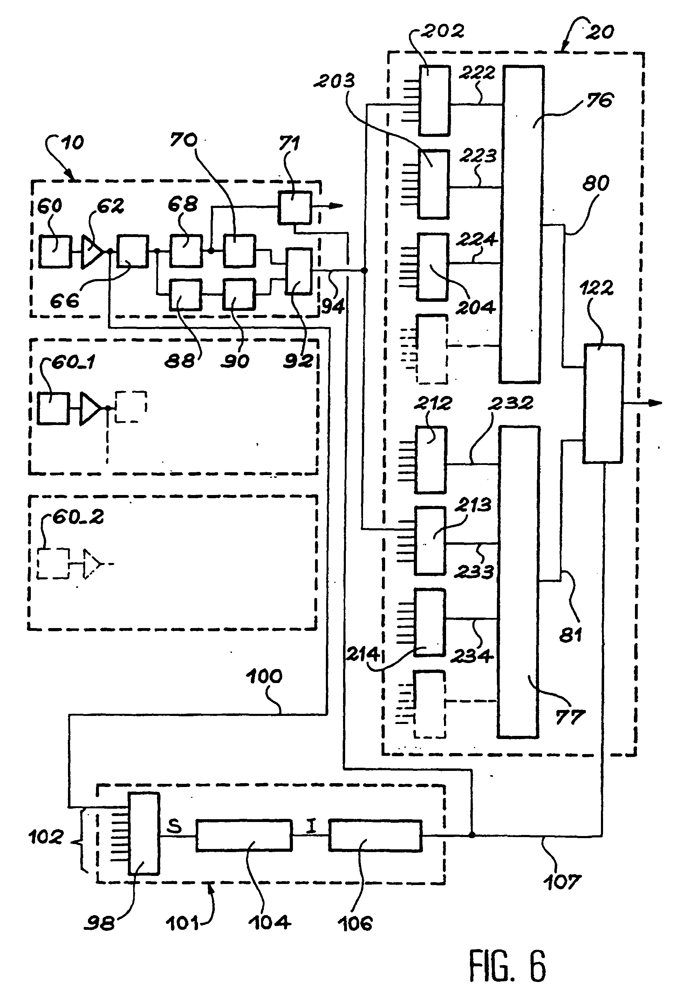

Selon un mode particulier de réalisation, le sommateur 68 peut comporter, comme illustré sur la figure 5, un registre à décalage 82 dont la longueur détermine le nombre d'échantillons sommés et un additionneur accumulateur 86. L'entrée sommatrice de ce dernier est connectée à la sortie du codeur, et son entrée soustractrice est connectée à la sortie du registre à décalage 82, de façon à ce qu'à chaque pas de codage le contenu de l'accumulateur situé dans 86 (qui représente la somme glissante) soit corrigé de l'écart entre l'entrée et la sortie du registre à décalage 86. la sortie de l'accumulateur est dirigée vers le comparateur 70 qui fournit alors un signal binaire de dépassement de seuil. De façon à limiter la durée de ce dépassement, celui-ci n'est de préférence valide que pendant une fenêtre temporelle centrée sur le maximum de la somme glissante. Ceci permet de séparer des événements proches dans le temps, mais géographiquement distincts sur le champ du détecteur.

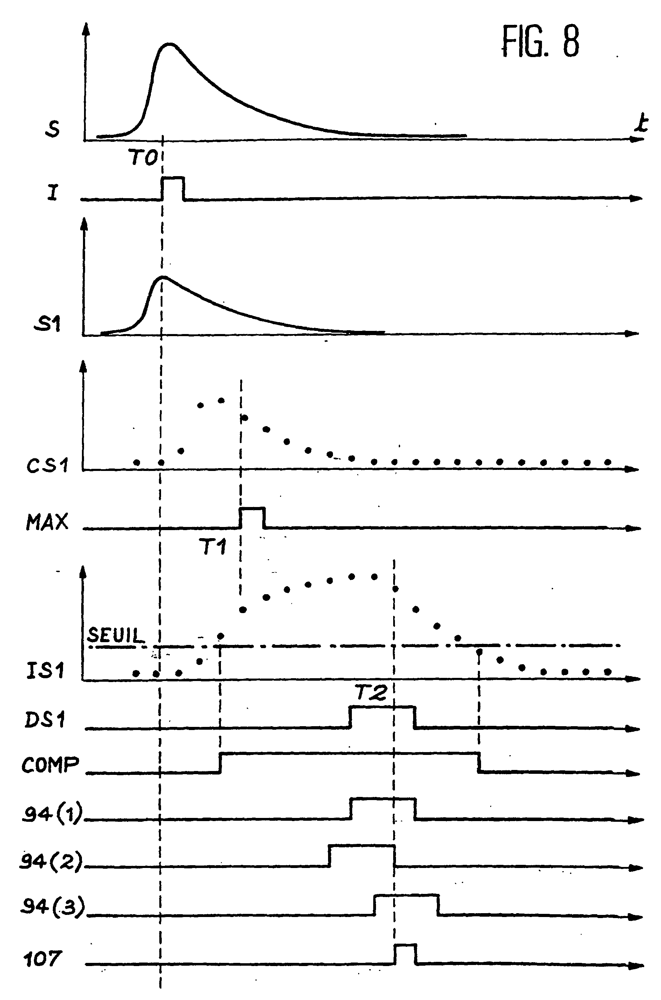

Cette fenêtre peut être positionnée en prenant comme référence l'instant de passage $T_1$ du signal codé par un maximum. Cette détection est réalisée dans l'entité 88 en comparant la valeur courante de la sortie du codeur à la valeur précédente. Lorsque la valeur courante est inférieure à la valeur précédente, le comparateur 88 émet une impulsion appelée MAX (figure 8). Cette impulsion est envoyée à un registre à décalage 90 dont on règle le retard ni pour générer une fenêtre temporelle $DS_1$ centrée sur le maximum de la somme glissante $IS_1$. Pour tenir compte de l'imprécision (plus ou moins un pas d'échantillonnage) de la détermination de la position du maximum du signal codé, la fenêtre temporelle est de préférence activée pendant $n_0$ pas d'échantillonnage (figure 4B) avec $n_0 \geq 3$ (par exemple $n_0 = 3$), ce choix d'un minimum de trois garantissant un minimum de simultanéité des signaux de dépassement de seuil entre les photomultiplicateurs activés par un même événement.

Une porte ET 92, dont les entrées sont le signal obtenu en sortie du comparateur 70, et le signal de sortie du registre à décalage 90, permet d'obtenir, sur sa sortie 94, un signal de dépassement de seuil (FLAG) à l'instant voulu par rapport au passage par le maximum de la somme numérique.

En résumé chaque photomultiplicateur, équipé du dispositif précédemment décrit, fournit deux informations. Une première information est la sortie du sommateur 68 qui représente l'intégrale curante et une seconde information, appelée FLAG en sortie 94 du ET 92, synchrone du maximum de l'intégrale courante, qui matérialise le fait que l'intégrale courante a dépassé, ou non, un seuil.

La figure 6 représente un dispositif, conforme à l'invention, pour le traitement des signaux issus de plusieurs photodétecteurs 60, 60-1, 60-2. Sur cette figure, des références identiques à celles de la figure 3 y désignent des éléments similaires ou correspondants.

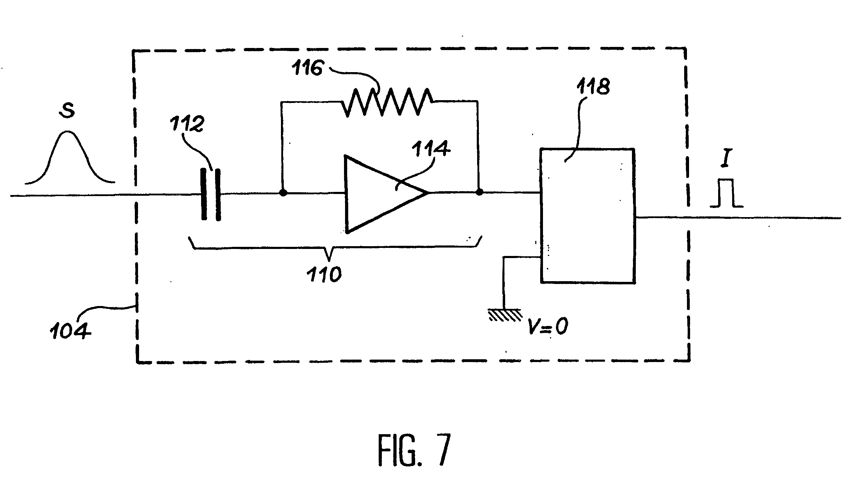

Sur cette figure, on voit qu'il est possible de prélever, en sortie du photodétecteur 60, un signal analogique 100, du type de celui qui est décrit ci-dessus en liaison avec la figure 4A. Sur la figure 6, la référence 102 désigne globalement l'ensemble des signaux analogiques prélevés sur les autres photodétecteurs 60-1, 60-2, .... L'ensemble de ces signaux rentrent dans un sommateur analogique 98 qui délivre un signal S (figure 8), somme de tous les signaux analogiques fournis par un certain nombre de photodétecteurs, par exemple par tous les photodétecteurs. Un dispositif 104 permet de délivrer une impulsion I lors du passage du signal S par son maximum. Ce dispositif 104 comporte, par exemple, comme illustré sur la figure 7, un différentiateur 110 (capacité 112, amplificateur 114 et résistances 116 entre l'entrée et la sortie de l'amplificateur 114) ; la sortie de ce différentiateur 110 alimente un comparateur 118 qui permet de détecter le passage à 0 de la sortie du différentiateur. L'impulsion I alimente l'entrée d'un registre à décalage 106 dont le pas p est réglé par l'horloge H. La sortie 107 de ce registre est dénommée impulsion de mémorisation et permet, en particulier, de déclencher le registre de mémorisation 71 correspondant au photodétecteur 60 et le registre 122 correspondant à la position présumée. Il déclenche également chaque registre de mémorisation associé à chaque photodétecteur. Le retard du registre à décalage 106 est réglé de façon à ce que le front montant du signal de mémorisation 107 soit synchrone de l'instant où l'on doit mémoriser les sommes dans les registres 71.

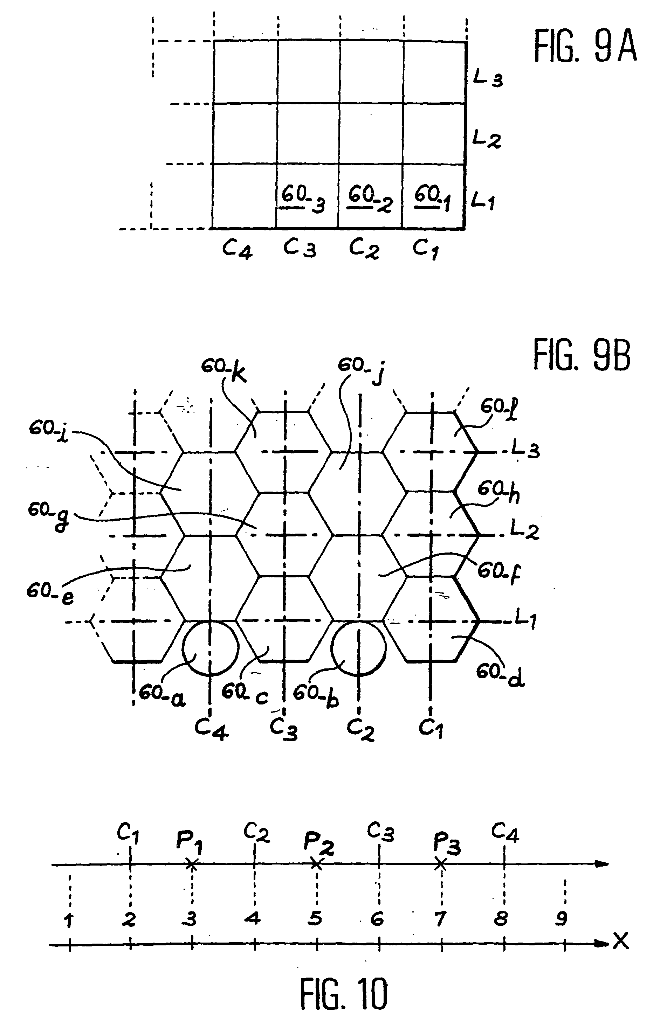

L'ensemble des photodétecteurs 60, 60-1, 60-2, ... est réparti par exemple en un réseau bidimensionnel, du type de ceux décrits plus loin en liaison avec les figures 9A ou 9B.

Les photodétecteurs peuvent donc être repérés par leur position suivant des lignes et des colonnes du réseau bidimensionnel.

Afin de repérer la position d'un événement par rapport à ce champ, ou réseau, bidimensionnel de photodétecteurs, on associe avantageusement une mémoire à accès lecture à une première direction de repérage dans le champ de photodétecteur et une mémoire à accès lecture à une seconde direction de repérage dans le champ des photodétecteurs. Si on repère ce champ par des lignes et des colonnes, on peut donc ainsi associer une mémoire à accès lecture pour repérer une coordonnée « ligne » et une mémoire à accès lecture pour repérer une coordonnée « colonne ».

Plus précisément, dans un dispositif selon l'invention, du type ce celui illustré en figure 6, les sorties 94 qui représentent, lorsqu'elles sont actives, les photodétecteurs du centre de l'interaction, sont utilisées de la manière suivante :

- un circuit OU (202) regroupe les sorties de type 94 des photodétecteurs d'une même colonne et génère un signal 222 actif lorsqu'au moins une de ses entrées est active. Il y a autant de circuits de type 222 que de colonnes,
- un circuit OU (212) regroupe les sorties de type 94 des photodétecteurs d'une même ligne et génère un signal 232 actif lorsqu'au moins une de ses entrées est active. Il y a autant de circuits de type 212 que de lignes.

Les signaux de type 222 sont les adresses d'une PROM 76 qui est programmée de façon à fournir la coordonnée (80) de la position présumée par rapport aux colonnes. De même, les signaux de type 232 sont les adresses d'une deuxième PROM 77 qui est programmée de façon à fournir la coordonnée (81) de la position présumée par rapport aux lignes. La position présumée, représentée par le couple de valeurs (80, 81), est mémorisée dans un registre 122, en même temps que l'on mémorise la contribution de tous les photodétecteurs dans lëurs registres respectifs (71). Cette mémorisation est déclenchée par le signal 107 généré par le registre 106.

La figure 8 représente chronologiquement les différents signaux :

- le signal S représente la somme analogique de tous les photodétecteurs lors d'un événement isolé,
- le signal I représente l'impulsion liée au passage de S par un maximum. Cette impulsion a lieu à l'instant $T_0$,
- le signal $S_1$ représente la sortie d'un photodétecteur faisant partie de ceux qui couvrent le lieu d'interaction de l'événement, et le signal $CS_1$ représente le signal $S_1$ après codage (en sortie du codeur analogique numérique 66),
- le signal_MAX représente l'impulsion liée au passage de $CS_1$ par un maximum lorsque $CS_1$ est supérieur à un seuil. Ce seuil sert à ne valider que les maxima significatifs, c'est-à-dire au-dessus du bruit. Le signal MAX se produit à l'instant $T_1$. La durée $T_1$-$T_0$ est liée au temps de codage. L'instant $T_1$ est défini à ±1 pas de codage près. Ceci est dû au bruit du codeur d'une part et au bruit du signal d'autre part,
- le signal $IS_1$ représente le signal en sortie du sommateur 68. L'instant $T_2$ représente l'instant de passage de l'intégrale par un maximum, donc l'instant théorique auquel on doit mémoriser la valeur des intégrales et la position présumée correspondante. La durée $T_2$-$T_1$ est liée à la durée d'intégration, c'est-à-dire au nombre d'échantillons pris en compte par le sommateur (ce nombre étant lui-même lié au pas de codage et à la durée moyenne des impulsions),
- le signal $DS_1$ est généré par le registre à décalage 90, il tient compte de l'imprécision de la détermination de $T_1$. Il dure trois pas de codage, et est retardé par rapport à $T_1$ de façon à être centré sur $T_2$.
- Le signal COMP est fourni par le comparateur 70. Le seuil de comparaison est réglé de façon à ne valider que les photodétecteurs proches du lieu de l'interaction,
- les signaux 94(1), 94(2) et 94(3) sont les sorties 94 de trois autres photodétecteurs proches du lieu de l'interaction pour lesquels l'énergie est supérieure au seuil. Ces sorties tiennent compte de toute l'imprécision de la détermination de $T_1$, donc de $T_2$, c'est pourquoi le signal de mémorisation 107 est généré par une chaîne analogique séparée,
- le signal de mémorisation 107 est généré à partir du signal I, retardé par le circuit 106. Ce décalage est réglé de façon à ce que les intégrales et la position présumée correspondante soient mémorisées à l'instant qui représente la valeur moyenne des différents instants $T_2$.

Des exemples de réseaux bidimensionnels de photodétecteurs sont illustrés sur les figures 9A et 9B. Plus précisément, ces figures représentent, dans chaque cas, une position d'un réseau de photodétecteurs en vue de dessus (ou, en d'autres termes, si l'on se reporte à la figure 1, vu à partir du scintillateur 22). La section transversale d'un photodétecteur peut avoir diverses formes, par exemple, carrée, hexagonale, ou circulaire.

La figure 9A correspond à un champ de photodétecteurs, en vue de dessus, chaque photodétecteur ayant une section carrée. Dans ce cas, chaque photodétecteur peut émettre un signal de dépassement de seuil pouvant le repérer suivant une ligne et suivant une colonne. Ainsi, sur la figure 9A, le photodétecteur 60-1 peut, en réponse à un événement, émettre un signal qui, s'il dépasse un certain seuil, entraînera l'émission -d'un signal de dépassement de seuil repérant la ligne $L_1$ et la colonne $C_1$. De même, le photodétecteur 60-2 peut être repéré par la ligne $L_1$ et la colonne $C_2$, des signaux de dépassement de seuil étant envoyés dans les mémoires 76, 77, qui correspondent à la ligne $L_1$ et à la colonne $C_2$.

La figure 9B représente, en vue de dessus, un champ mixte de photodétecteurs hexagonaux et ronds. Les photodétecteurs 60-a, 60-b ont une section transversale circulaire, tandis que les autres photodétecteurs ont une section transversale hexagonale. Dans un tel cas, le champ de photodétecteurs définit clairement des colonnes juxtaposées 60-i, 60-e, 60-a ($C_4$) ; 60-k, 60-g, 60-c ($C_3$), 60-j, 60-f, 60-b ($C_2$) ; 60-1, 60-h, 60-d ($C_1$). Chaque photodétecteur correspond à une colonne et une seule. Par contre, l'attribution d'une ligne à un photodétecteur se fait sans ambiguïté uniquement pour le cas où ladite ligne passe le milieu du photodétecteur : sur la figure 9B, c'est le cas des photodétecteurs 60-k, 60-1 (ligne $L_3$) ; 60-g, 60-h (ligne $L_2$) ; 60-c, 60-d (ligne $L_1$). Pour les autres photodétecteurs, situés entre deux lignes, il est préférable que leur signal de dépassement de seuil résulte, vers la mémoire à accès lecture correspondante, en une émission de signaux d'adressage correspondant à la fois aux deux lignes entre lesquelles ils sont situés. Ainsi, si le photodétecteur 60-f délivre un signal dont l'énergie dépasse le seuil fixé, un signal de dépassement de seuil est émis pour la colonne $C_2$ et pour les lignes $L_1$ et $L_2$. De même, lorsqu'un événement provoquant un dépassement de seuil pour le photodétecteur 60-j, il en résulte un signal d'adressage de colonne $C_2$ et d'adressage des lignes $L_2$ et $L_3$.

Une méthode va maintenant être décrite, qui permet de définir, ou de coder, le signal représentatif d'une position d'un événement, en fonction des signaux de dépassement de seuil. Dans le cas d'une mémoire à accès lecture, il s'agit de réaliser le codage des combinaisons de lignes et/ou de colonnes-- pour lesquelles un signal de dépassement de seuil apparaît lors d'un événement.

Comme illustré sur la figure 10, et en conservant toujours l'exemple d'un ensemble de quatre colonnes de photodétecteurs $C_1$-$C_4$, il est possible de repérer non seulement la position des colonnes suivant un axe, mais également la position des points $P_1$, $P_2$, $P_3$ situés à mi-chemin entre les colonnes (points auxquels on attribue des chiffres impairs sur l'échelle du bas de la figure 10). Ces points intermédiaires correspondent aux limites entre deux photodétecteurs voisins de deux colonnes voisines.

Les champs de photodétecteurs ou de photomultiplicateurs actuellement utilisés, en particulier dans le cas d'une gamma caméra, comportent typiquement au maximum entre 50 et 100 photodétecteurs. Par conséquent, une douzaine de colonnes au maximum (et une douzaine de lignes) suffit pour décrire ces champs de photodétecteurs. Il est donc possible d'utiliser une mémoire à accès lecture (PROM) de dimensions raisonnable (de l'ordre de 4 K octets) pour coder les groupements de colonnes, les colonnes successives constituant les adresses de la PROM. Pour des champs, ou réseaux, de photodétecteurs plus importants, la taille de la PROM sera choisie en conséquence.

Par ailleurs, si l'on tient compte du fait qu'un événement ne peut en général activer que des colonnes jointives ou connexes (par exemple, 1, 2, 3 ou 4 suivant l'énergie de l'événement et le seuil utilisé), seul un nombre restreint de combinaisons « valides » est à retenir et à coder. L'expression de la position de l'événement sur l'axe X de repérage des colonnes ne nécessitant pas huit bits, il est possible d'utiliser, le bit de poids fort ($Q_7$) pour coder la validité de la position obtenue. Le tableau I ci-dessous donne les signaux envoyés sur trois entrées d'adressage $A_0$, $A_1$, $A_2$ d'une PROM, en fonction de la combinaison des signaux de dépassement de seuil pour les colonnes C1, C2, C3 (0 = pas de signal de dépassement de seuil, 1 = un signal de dépassement de seuil). Le contenu décimal de la PROM, résultant de ces combinaisons, est donné dans la quatrième colonne ($A_0 = 1$, $A_1 = 2$, $A_2 = 2^2$). La cinquième colonne donne le bit de validité : lorsque deux colonnes, séparées par une troisième, émettent un signal de dépassement de seuil, alors que la troisième n'en émet pas, la combinaison n'est pas valide et n'est pas retenue (bit de validité = 0). La programmation de la PROM permet ensuite d'attribuer, en fonction du contenu décimal, une position d'événement :

- lorsque seule la première colonne émet un signal de dépassement de seuil (adresse $A_0$, le contenu décimal = 1), l'événement est identifié en position 2 sur l'échelle X de la figure 10 ;
- lorsqu'un signal de dépassement de seuil correspondant à la seule colonne C2 est émis, l'événement est localisé en position 4 sur l'échelle X de la figure 10 ;
- lorsque des signaux de dépassement de seuil correspondant aux colonnes $C_1$ et $C_2$ sont émis, l'événement est positionné non pas sur l'une ou l'autre des colonnes, mais en position intermédiaire 3 sur l'échelle X (figure 10) ;
- lorsqu'un seul signal de dépassement de seuil est émis, correspondant à la colonne $C_3$, l'événement est localisé en position 6 sur l'échelle X ;
- lorsque deux signaux de dépassement de seuil sont émis, correspondant aux colonnes $C_2$ et $C_3$, l'événement est localisé en position intermédiaire 5, sur l'échelle X, entre les colonnes.

TABLEAU I

| Adresse $A_0$ | Adresse $A_1$ | Adresse $A_2$ | Contenu décimal | Bit de validité | Position de l'événement (X) |
|---|---|---|---|---|---|
| $C_1$ | $C_2$ | $C_3$ | | | |
| 0 | 0 | 0 | 0 | 0 | 0 |
| 1 | 0 | 0 | 1 | 1 | 2 |
| 0 | 1 | 0 | 2 | 1 | 4 |
| 1 | 1 | 0 | 3 | 1 | 3 |
| 0 | 0 | 1 | 4 | 1 | 6 |
| 1 | 0 | 1 | 5 | 0 | 0 |
| 0 | 1 | 1 | 6 | 1 | 5 |
| 1 | 1 | 1 | 7 | 1 | 4 |

Ce codage peut être généralisé à quatre colonnes et plus. Une fois que le codage de la PROM est réalisé, une combinaison définie de colonnes pour lesquelles des signaux de dépassement du seuil sont émis, correspond à une position unique de l'événement par rapport à l'ensemble des colonnes. Cette position est codée sur les bits de sortie de la PROM, sauf pour le bit de poids fort qui permet de coder la validité de la combinaison.

Les mêmes raisonnements et le même type de codage peuvent être réalisés pour la détermination de la position de l'événement en « Y », suivant les lignes. Les signaux de dépassement de seuil ordonnés suivant les lignes, sont codés à l'aide d'une seconde (PROM 77 de la figure 6, par exemple), qui peut être identique à la précédente. Pour le cas d'un champ de détecteur à section hexagonale et/ou circulaire (cas de la figure 9B), le codage des positions des photodétecteurs situés entre deux lignes consécutives ne pose pas plus de problème : ainsi, l'identification d'un événement suivant la colonne $C_2$ et suivant les lignes $L_1$ et $L_2$ correspond à un événement localisé au-dessus du photodétecteur 60-f.

La position d'un événement peut par conséquent être représentée par un couple (X, Y) qui repère cet événement dans le champ ou l'ensemble bidimensionnel de photodétecteurs ou de photomultiplicateurs. Sont retenues, comme seules positions valides, les seuls couples (X, Y) dont les deux éléments auront satisfait aux critères de validité.

Un dispositif et un procédé selon l'invention permettent de localiser un événement, non seulement au-dessus de l'un ou de l'autre des photodétecteurs d'un champ de photodétecteurs, mais également à la limite de deux photodétecteurs, voire de trois photodétecteurs.

Sur la figure 6, le signal 126 émis contient cette information de localisation. Ce signal peut être transmis à un micro-ordinateur spécifiquement programmé pour sélectionner un environnement spécifique du groupe de photodétecteurs concernés par l'interaction (c'est-à-dire du groupe de photodétecteurs ayant émis un signal de dépassement de seuil), ce qui permet ensuite de calculer les caractéristiques de l'événement à partir de l'environnement retenu.

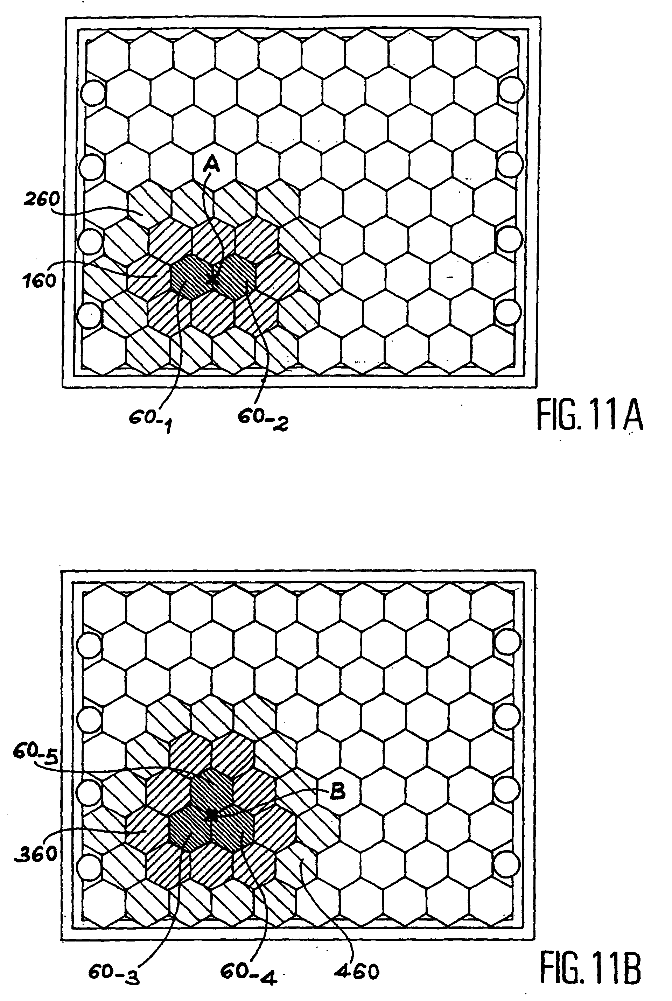

Ainsi, les figures 11A et 11B représentent chacune un champ de photodétecteurs à section hexagonale, complété sur les bords par des photodétecteurs à section circulaire.

Sur la figure 11A, deux photodétecteurs 60-1, 60-2, ont émis des signaux de dépassement de seuil. Il en résulte une identification de la position de l'événement, à la limite (point A) entre les deux photodétecteurs 60-1 et 60-2. L'ordinateur auquel cette information est transmise peut ensuite sélectionner, par exemple dans une mémoire dans laquelle les données d'intensités émises par les photodétecteurs sont stockées, la première couronne 160 de photodétecteurs et la seconde couronne 260 de photodétecteurs, qui entourent les photodétecteurs 60-1 et 60-2 directement concernés par l'interaction. L'énergie totale de l'événement peut, par exemple, être calculée, en faisant la somme de tous les signaux délivrés par les photodétecteurs directement concernés par l'interaction (60-1, 60-2 sur la figure 11A) et de tous les signaux émis par les photodétecteurs de première couronne et de deuxième couronne (160 et 260).

La figure 11B représente le cas d'un événement ayant induit un signal de dépassement de seuil pour trois photodétecteurs 60-3, 60-4, 60-5 disposés comme illustré sur la figure 11B. L'événement est donc localisé au point B, intersection entre les trois photodétecteurs. L'ordinateur doit donc prendre en compte les informations concernant les photodétecteurs de première couronne 360 et les photodétecteurs de deuxième couronne 460 pour calculer des caractéristiques, par exemple, l'énergie de l'événement.

Le dispositif selon l'invention a été décrit en mettant en oeuvre un critère de dépassement de seuil pour l'énergie du signal numérisé. Il est également possible de retenir d'autres critères, par exemple, un critère de dépassement de seuil du maximum du signal numérisé. Dans ce cas, le comparateur 70 de la figure 6 compare le signal numérisé issu du digitaliseur 66 à une valeur seuil prédéterminée.

La méthode de codage par PROM qui a été décrite permet d'obtenir, avec une très grande rapidité, un signal de positionnement de l'événement. Une méthode algorithmique serait plus lente.

Les mémoires PROM peuvent être remplacées par tout type de dispositif ou de mémoire dans lequel un codage de positionnement peut être introduit ou stocké. Ainsi, la description faite avec une PROM peut être généralisée à tout moyen ou support de codage à accès lecture, programmable.

Il peut être intéressant de réaliser le codage à l'aide de mémoires pouvant être reprogrammées. Le dispositif est en effet, alors, réutilisable pour d'autres configurations de photodétecteurs.

**Revendications**

**1.** Dispositif de traitement de signaux d'un ensemble de N photodétecteurs (60) de gamma-caméra comprenant des moyens (68), associés à chaque photodétecteur, pour produire un signal représentatif de la valeur du maximum, ou de l'énergie, d'une impulsion délivrée par le photodétecteur et numérisée **caractérisé en ce qu'**il comprend :

- des moyens (70) pour produire un signal de dépassement d'un seuil ($V_r$) pour chaque photodétecteur lorsque l'amplitude du signal représentatif de la valeur du maximum, ou de l'énergie, de l'impulsion numérisée est supérieure audit seuil ;
- des moyens (76, 77), communs aux photodétecteurs, pour délivrer un signal représentatif d'une position présumée d'un événement en fonction des signaux de dépassement de seuil, le signal représentatif de la position présumée d'un événement permettant de repérer ou de coder une zone du champ des N photodétecteurs concernée par l'événement pour calculer la position précise dudit événement, de sorte que :

  - si un seul signal de dépassement de seuil est délivré provenant d'un photodétecteur quelconque pris parmi les N photodétecteurs, alors la position présumée est la position dudit photodétecteur quelconque, et

- si au moins deux signaux de dépassement de seuil sont délivrés provenant d'au moins deux photodétecteurs voisins pris parmi les N photodétecteurs, alors la position présumée est une position intermédiaire entre lesdits au moins deux photodétecteurs voisins.

2. Dispositif selon la revendication 1, comportant, en outre, des moyens (88, 90), associés à chaque photodétecteur, pour détecter la position temporelle du maximum de l'impulsion numérisée et pour retarder l'émission du signal de dépassement de seuil pendant une certaine durée à partir de ladite position temporelle.

3. Dispositif selon l'une des revendications 1 ou 2, comportant, en outre :

- des moyens (98) pour former un signal analogique total, égal à la somme des signaux analogiques délivrés par $N_1$ photodétecteurs ($N_1 \leq N$) ;
- des moyens (104) pour délivrer un signal représentatif de la position temporelle du maximum du signal analogique total ;
- des moyens (106) pour retarder la délivrance du signal représentatif de la position d'un événement pendant un certain intervalle de temps s'écoulant à partir de la position temporelle du maximum du signal analogique total.

4. Dispositif selon l'une des revendications 1 à 3, les moyens (76, 77) pour délivrer un signal représentatif de la position d'un événement étant tels que ledit signal ne dépend que de signaux de dépassement de seuil produits à l'intérieur d'une fenêtre temporelle dont l'instant d'origine est fixé avec un décalage par rapport à chaque événement.

5. Dispositif selon l'une des revendications 1 à 4, les moyens (76, 77) pour délivrer un signal représentatif d'une position étant tels qu'un tel signal n'est émis que si l'ensemble des signaux de dépassement de seuil produits correspondent à des photodétecteurs voisins ou connexes.

6. Dispositif selon l'une des revendications 1 à 5, comportant, en outre, pour chaque photodétecteur (60), des moyens (66) de numérisation d'une impulsion délivrée par le photodétecteur (60), la numérisation étant effectuée suivant un certain pas p.

7. Dispositif selon la revendication 6, chaque signal de dépassement de seuil étant émis pendant une durée supérieure ou égale à 3 p.

8. Dispositif pour la détection d'événements comportant :

- un réseau bidimensionnel de N photodétecteurs (60), définissant un plan ;
- des moyens de numérisation (66), associés à chaque photodétecteur ;
- un dispositif selon l'une des revendications 1 à 5.

9. Dispositif selon la revendication 8, le signal représentatif d'une position d'un événement comportant une première composante et une deuxième composante, chaque composante correspondant à une coordonnée de l'événement repérée dans le plan du réseau bidimensionnel des photodétecteurs.

10. Dispositif selon l'une des revendications 8 ou 9, les photodétecteurs étant disposés suivant un réseau carré.

11. Dispositif selon la revendication 10, les photodétecteurs étant à section transversale carrée.

12. Dispositif selon l'une des revendications 8 ou 9, les photodétecteurs étant disposés suivant un réseau à symétrie hexagonale.

13. Dispositif selon la revendication 12, les photodétecteurs étant à section transversale hexagonale ou circulaire.

14. Dispositif selon l'une des revendications 1 à 13, les moyens, pour délivrer un signal représentatif d'une position d'un événement, ne délivrant aucun signal de position lorsque deux signaux de dépassement de seuil sont émis par des photodétecteurs non voisins.

15. Dispositif selon la revendication 1, **caractérisé en ce que** les moyens pour produire un signal représentatif de la valeur de l'énergie d'une impulsion numérisée comprennent N unités (66) de codage numérique et des moyens (68) de sommation numérique ou de détection d'amplitude maximum associés à chaque unité de codage numérique, **en ce que** les moyens pour produire un signal de dépassement de seuil sont des moyens de comparaison d'un signal de sortie des moyens de sommation avec une valeur prédéterminée, et **en ce que** les moyens communs aux photodétecteurs pour délivrer un signal représentatif d'une position d'un évènement comprennent au moins une mémoire (76, 77) à accès lecture, adressée par les sorties des moyens de comparaison.

16. Dispositif selon la revendication 15, comportant, en outre, associés à chaque unité de codage numérique :

- des moyens (88) de détection de la position temporelle du maximum d'une impulsion numérisée, ces moyens étant commandés par l'unité de codage numérique correspondante ;
- un registre à décalage (90) ; et
- une porte ET (92) commandée par la sortie des moyens de comparaison et la sortie du registre à décalage.

17. Dispositif selon la revendication 15 ou 16, comportant, en outre :

- des moyens (98) de sommation analogiques destinés à recevoir en entrée les sorties des N photodétecteurs ;
- des moyens (104) de détection d'un maximum d'un signal analogique, commandés par les moyens de sommation analogiques ;
- un registre à décalage (106) commandé par les moyens de détection de maximum ;
- un registre (122) commandé par la mémoire à accès lecture (76) et par le registre à décalage (106) précédent.

18. Dispositif selon l'une des revendications 15 à 17, comportant deux mémoires (76, 77) à accès lecture.

19. Dispositif pour la détection d'événements, comportant :

- un réseau bidimensionnel de N photodétecteurs ;
- un dispositif selon l'une des revendications 15 à 18.

20. Caméra comportant un dispositif selon l'une des revendications 8 à 13 ou 19, les photodétecteurs étant des photomultiplicateurs.

21. Dispositif d'imagerie en rayonnement gamma, comportant une caméra selon la revendication 20.

22. Procédé de traitement de signaux produits par un ensemble de N photodétecteurs (60) de gamma-caméra, en réponse à un événement, le procédé comportant, pour chaque photodétecteur; la production d'un signal représentatif de la valeur du maximum, ou de l'énergie, d'une impulsion délivrée par le photodétecteur et numérisée, **caractérisée en ce qu'**il comprend :

- la production d'un signal de dépassement d'un seuil ($V_r$), pour chaque photodétecteur, lorsque l'amplitude du signal représentatif de la valeur du maximum, ou de l'énergie, de l'impulsion numérisée est supérieure audit seuil ;
- la formation d'un signal représentatif d'une position présumée d'un événement en fonction des signaux de dépassement de seuil, le signal représentatif de la position présumée d'un événement permettant de repérer ou de coder une zone du champ des N photodétecteurs concernée par l'événement pour calculer la position précise dudit événement, de sorte que :

- si un seul signal de dépassement de seuil est délivré provenant d'un photodétecteur quelconque pris parmi les N photodétecteurs, alors la position présumée est la position dudit photodétecteur quelconque, et
- si au moins deux signaux de dépassement de seuil sont délivrés provenant d'au moins deux photodétecteurs voisins pris parmi les N photodétecteurs, alors la position présumée est une position intermédiaire entre lesdits au moins deux photodétecteurs voisins.

23. Procédé selon la revendication 22, comportant, en outre, pour chaque photodétecteur, la détection de la position temporelle du maximum de l'impulsion numérisée, et le retard de l'émission du signal de dépassement de seuil pendant une certaine durée à partir de ladite position temporelle.

24. Procédé selon l'une des revendications 22 ou 23, comportant, en outre :

- la formation d'un signal analogique total, égal à la somme des signaux analogiques délivrés par $N_1$ photodétecteurs ($N_1 \leq N$) ;
- la délivrance d'un signal représentatif de la position temporelle du maximum du signal analogique total ;
- le retard de la délivrance du signal représentatif de la position d'un événement pendant un certain intervalle de temps s'écoulant à partir de la position temporelle du maximum du signal analogique total.

**25.** Procédé selon l'une des revendications 22 à 24, la formation d'un signal représentatif de la position d'un événement étant telle que ledit signal ne dépend que de signaux de dépassement de seuil produits à l'intérieur d'une fenêtre temporelle dont l'instant d'origine est fixé avec un décalage par rapport à chaque événement.

**26.** Procédé selon l'une des revendications 22 à 25, la formation d'un signal représentatif d'une position étant telle qu'un signal n'est émis que si l'ensemble des signaux de dépassement de seuil produits correspondent à des photodétecteurs voisins ou connexes.

**27.** Procédé selon l'une des revendications 22 à 26, comportant, en outre, pour chaque photodétecteur (60), une étape de numérisation d'une impulsion délivrée par le photodétecteur (60), la numérisation étant effectuée suivant un certain pas p.

**28.** Procédé selon la revendication 27, chaque signal de dépassement de seuil étant émis pendant une durée supérieure ou égale à 3 p.

**29.** Procédé pour la détection d'événements par rapport à un réseau bidimensionnel de N photodétecteurs (60), définissant un plan, des moyens de numérisation (66) étant associés à chaque photodétecteur, ce procédé comportant un procédé de traitement de signaux selon l'une des revendications 22 à 26.

**30.** Procédé selon la revendication 29, le signal représentatif d'une position d'un événement comportant une première composante et une deuxième composante, chaque composante correspondant à une coordonnée de l'événement repérée dans le plan du réseau bidimensionnel des photodétecteurs.

**31.** Procédé selon l'une des revendications 22 à 30, la formation d'un signal représentatif d'une position d'un événement, étant telle qu'aucun signal de position n'est formé ou délivré lorsque deux signaux de dépassement de seuil sont émis par des photodétecteurs non voisins.

**32.** Procédé d'imagerie en correction d'atténuation par transmission, mettant en oeuvre le procédé selon la revendication 31.

**33.** Procédé d'imagerie PET en coïncidence mettant en oeuvre.le procédé selon la revendication 31.

**Claims**

**1.** Device for processing signals from an array of N gamma camera photodetectors (60) comprising means (68), associated with each photodetector, for producing a signal representative of the value of the maximum or the energy of a pulse delivered by the photodetector and digitized, **characterized in that** it comprises:

- means (70) for producing a threshold-exceeding signal (Vr) for each photodetector when the amplitude of the signal representative of the value of the maximum or the energy of the digitized pulse exceeds said threshold,
- means (76, 77), common to the photodetectors, for delivering a signal representative of an assumed position of an event as a function of the threshold-exceeding signals, the signal representative of the assumed position of an event making it possible to identify or encode an area of the field of the N photodetectors involved by the event in order to calculate the precise position of said event in such a way that:

   if a single threshold exceeding signal is delivered from a random photodetector among the N photodetectors, then the assumed position is the position of said random photodetector and

   if at least two threshold exceeding signals are delivered from at least two neighbouring photodetectors from among the N photodetectors, then the assumed position is an intermediate position between said at least two neighbouring photodetectors.

2. Device according to claim 1, further having means (88, 90), associated with each photodetector, for detecting the timewise position of the maximum of the digitized pulse and for delaying the emission of the threshold-exceeding signal for a certain duration from the said timewise position.

3. Device according to either of claims 1 or 2, further having:

- means (98) for forming a total analog signal, equal to the sum of the analog signals delivered by $N_1$ photodetectors ($N_1 \le N$);
- means (104) for delivering a signal representing the timewise position of the maximum of the total analog signal;
- means (106) for delaying the delivery of the signal representing the position of an event for a certain time interval running from the timewise position of the maximum of the total analog signal.

4. Device according to one of claims 1 to 3, the means (76, 77) for delivering a signal representing the position of an event being such that the said signal depends only on threshold-exceeding signals produced inside a time slot whose instant of origin is fixed with a shift with respect to each event.

5. Device according to one of claims 1 to 4, the means (76, 77) for delivering a signal representing a position being such that such a signal is only emitted if all the threshold-exceeding signals produced correspond to neighbouring or related photodetectors.

6. Device according to one of claims 1 to 5, further having, for each photodetector (60), means (66) of digitizing a pulse delivered by the photodetector (60), the digitizing being performed with a certain step p.

7. Device according to claim 6, each threshold-exceeded signal being issued for a duration greater than or equal to 3p.

8. Device for detecting events, having:

- a two-dimensional array of N photodetectors (60), defining a map;
- digitization means (66), associated with each photodetector;
- a device according to one of claims 1 to 5.

9. Device according to claim 8, the signal representing a position of an event having a first component and a second component, each component corresponding to a coordinate of the event located in the map of the two-dimensional photodetector array.

10. Device according to either of claims 8 or 9, the photodetectors being disposed in a square array.

11. Device according to claim 10, the photodetectors having a square cross-section.

12. Device according to either of claims 8 or 9, the photodetectors being disposed in a hexagonally symmetrical array.

13. Device according to claim 12, the photodetectors having a hexagonal or circular cross-section.

14. Device according to one of claims 1 to 13, the means for delivering a signal representing a position of an event not delivering any position signal when two threshold-exceeding signals are issued by non-neighbouring photodetectors.

15. Device according to claim 1, **characterized in that** the means for producing a signal representative of the value of the energy of a digitized pulse comprise N digital coding units (66) and means (68) for digital summation or maximum amplitude detection associated with each digital coding unit, that the means for producing the threshold-exceeding signal are means for comparing an output signal from the summation means with a predetermined value and that the means common to the photodetectors for delivering a signal representative of a position of an event comprise at least one read-access memory (76, 77) addressed by the outputs of the comparison means.

16. Device according to claim 15, further having, associated with each digital coding unit:

- means (88) of detecting the timewise position of the maximum of a digitized pulse, these means being controlled by the corresponding digital coding unit;

- a shift register (90); and
- an AND gate (92) controlled by the output of the comparison means and the output of the shift register.

17. Device according to claim 15 or 16, further having:

- analog summation means (98) intended to receive, at the input, the outputs of the N photodetectors;
- means (104) of detecting a maximum of an analog signal, controlled by the analog summation means;
- a shift register (106) controlled by the maximum-detecting means;
- a register (122) controlled by the read-access memory (76) and by the previous shift register (106).

18. Device according to one of claims 15 to 17, having two read-access memories (76, 77).

19. Device for detecting events, having:

- a two-dimensional array of N photodetectors;
- a device according to one of claims 15 to 18.

20. Camera having a device according to one of claims 8 to 13 or 19, the photodetectors being photomultipliers.

21. Gamma radiation imaging device, having a camera according to claim 20.

22. Method for processing signals produced by an array of N gamma camera photodetectors (60) in response to an event, the method comprising, for each photodetector, the production of a signal representative of the value of the maximum or the energy of a pulse delivered by the photodetector and digitized, **characterized in that** it comprises:

- the production of a threshold-exceeding signal (Vr) for each photodetector, when the amplitude of the signal representative of the value of the maximum or the energy of the digitized pulse exceeds said threshold,
- the formation of a signal representative of an assumed position of an event as a function of threshold-exceeding signals, the signal representative of the assumed position of an event making it possible to identify or code an area of the field of the N photodetectors involved by the event for calculating the precise position of said event, in such a way that:

- if a single threshold-exceeding signal is delivered from a random photodetector among the N photodetectors, then the assumed position is the position of said random photodetector and
- if at least two threshold-exceeding signals are delivered from at least two neighbouring photodetectors from among the N photodetectors, then the assumed position is an intermediate position between said at least two neighbouring photodetectors.

23. Method according to claim 22, further including, for each photodetector, detection of the timewise position of the maximum of the digitized pulse, and delaying of the issuing of the threshold-exceeding signal for a certain duration from the said timewise position.

24. Method according to either of claims 22 or 23, further including:

- the formation of a total analog signal, equal to the sum of the analog signals delivered by $N_1$ photodetectors $(N_1 \le N)$;
- the delivery of a signal representing the timewise position of the maximum of the total analog signal;
- the delaying of the delivery of the signal representing the position of an event for a certain time interval running from the timewise position of the maximum of the total analog signal.

25. Method according to one of claims 22 to 24, the formation of a signal representing the position of an event being such that the said signal depends only on threshold-exceeding signals produced inside a time slot whose instant of origin is fixed with a shift with respect to each event.

26. Method according to one of claims 22 to 25, the formation of a signal representing a position being such that a signal is only emitted if all the threshold-exceeding signals produced correspond to neighbouring or related photodetectors.

27. Method according to one of claims 22 to 26, further including, for each photodetector (60), a step of digitizing a pulse delivered by the photodetector (60), the digitizing being performed with a certain step p.

28. Method according to claim 27, each threshold-exceeding signal being emitted for a duration greater than or equal to 3p.

29. Method for detecting events in relation to a two-dimensional array of N photodetectors (60), defining a map, digitination means (66) being associated with each photodetector, this method including a signal processing method according to one of claims 22 to 26.

30. Method according to claim 29, the signal representing a position of an event having a first component and a second component, each component corresponding to a coordinate of the event located in the map of the two-dimensional photodetector array.

31. Method according to one of claims 22 to 30, the formation of a signal representing a position of an event being such that no position signal is formed or delivered when two threshold-exceeding signals are emitted by non-neighbouring photodetectors.

32. Attenuation equalization by transmission imaging method, implementing the method according to claim 31.

33. Coincidence PET imaging method, implementing the method according to claim 31.

**Patentansprüche**

1. Vorrichtung zur Signalverarbeitung einer Anordnung von N Fotodetektoren (60) einer Gammakamera, die Mittel (68) umfaßt, die den einzelnen Fotodetektoren zugeordnet sind, um ein Signal zu erzeugen, das typisch für den Höchstwert oder die Energie eines vom Fotodetektor abgegebenen, digitalisierten Impulses ist, wobei diese Vorrichtung **dadurch gekennzeichnet ist, daß** sie folgende Elemente umfaßt:

   - Mittel (70) zur Erzeugung eines Signals bei Überschreiten eines Schwellwertes ($V_r$) für jeden einzelnen Fotodetektor, wenn die Amplitude des Signals, das typisch für den Höchstwert oder die Energie des digitalisierten Impulses ist, höher als dieser Schwellwert ist

   - gemeinsame Mittel (76, 77) der Fotodetektoren, um ein Signal zu liefern, das typisch für die vermutete Position eines Ereignisses ist, und zwar in Abhängigkeit von den Schwellwertüberschreitungssignalen, wobei es durch das für die vermutete Position eines Ereignisses typische Signal möglich ist, einen Bereich aus dem Feld der N Fotodetektoren zu markieren oder zu kodieren, der von dem Ereignis betroffen ist, um so die genaue Position dieses Ereignisses zu berechnen, und zwar mit folgendem Zweck:

      - Wird lediglich ein einziges Schwellwertüberschreitungssignal von einem beliebigen der N Fotodetektoren abgegeben, dann ist die vermutete Position gleich der Position dieses beliebigen Fotodetektors, und:

         - werden mindestens zwei Schwellwertüberschreitungssignale von mindestens zwei nebeneinanderliegenden der N Fotodetektoren geliefert, dann liegt die vermutete Position zwischen diesen benachbarten Fotodetektoren, deren Anzahl mindestens zwei beträgt.

2. Vorrichtung nach Anspruch 1, die außerdem Mittel (88, 90) umfaßt, die jedem Fotodetektor zugeordnet sind und die temporäre Position des Höchstwertes des digitalisierten Impulses erfassen und das Senden des Schwellwertüberschreitungssignals von dieser temporären Position aus um eine bestimmte Zeitdauer verzögern.

3. Vorrichtung nach einem der Ansprüche 1 oder 2, die außerdem folgende Elemente umfaßt:

   - Mittel (98) zur Bildung eines analogen Gesamtsignals, das gleich der Summe der von $N_1$ Fotodetektoren gelieferten Analogsignale ist, wobei $N_1 \leq N$ ist,

   - Mittel (104) zur Abgabe eines Signals, das typisch für die temporäre Position des Höchstwertes des analogen Gesamtsignals ist,

- Mittel (106) zur Verzögerung der Abgabe des für die Position eines Ereignisses typischen Signals für eine bestimmte Zeitdauer ab der temporären Position des Höchstwertes des analogen Gesamtsignals.

4. Vorrichtung nach einem der Ansprüche 1 bis 3, bei der die Mittel (76, 77) zur Abgabe eines Signals, das typisch für die Position eines Ereignisses ist, so ausgelegt sind, daß dieses Signal nur von den Schwellwertüberschreitungssignalen abhängt, die innerhalb eines bestimmten Zeitfensters erzeugt werden, das in einem Abstand zu den einzelnen Ereignissen beginnt.

5. Vorrichtung nach einem der Ansprüche 1 bis 4, bei der die Mittel (76, 77) zur Abgabe eines Signals, das typisch für eine Position ist, so ausgelegt sind, daß dieses Signal nur dann gesendet wird, wenn alle erzeugten Schwellwertüberschreitungssignale benachbarten oder zusammenhängenden Fotodetektoren zuzuordnen sind.

6. Vorrichtung nach einem der Ansprüche 1 bis 5, die außerdem für jeden Fotodetektor (60) Mittel (66) zur Digitalisierung eines vom Fotodetektor (60) ausgegebenen Impulses umfaßt, wobei die Digitalisierung nach einem bestimmten Schritt p erfolgt.

7. Vorrichtung nach Anspruch 6, bei der jedes Schwellwertüberschreitungssignal während einer Dauer ausgesendet wird, die größer/gleich 3p ist.

8. Vorrichtung zur Ermittlung von Ereignissen, die folgende Elemente umfaßt:

- ein zweidimensionales Netz aus N Fotodetektoren (60), die eine Ebene bilden
- Digitalisierungsmittel (66) für jeden Fotodetektor
- eine Vorrichtung nach einem der Ansprüche 1 bis 5

9. Vorrichtung nach Anspruch 8, wobei das für die Position eines Ereignisses typische Signal eine erste und eine zweite Komponente umfaßt und jede dieser Komponenten einer der Koordinaten des ermittelten Ereignisses in der Ebene des zweidimensionalen Fotodetektornetzes entspricht.

10. Vorrichtung nach einem der Ansprüche 8 oder 9, bei der die Fotodetektoren so angeordnet sind, daß sie ein viereckiges Netz bilden.

11. Vorrichtung nach Anspruch 10, bei der die Fotodetektoren einen quadratischen Querschnitt haben.

12. Vorrichtung nach einem der Ansprüche 8 oder 9, bei der die Fotodetektoren so angeordnet sind, daß sie ein hexagonales System bilden.

13. Vorrichtung nach Anspruch 12, bei der die Fotodetektoren einen hexagonalen oder runden Querschnitt haben.

14. Vorrichtung nach einem der Ansprüche 1 bis 13, bei der die Mittel zur Abgabe eines für die Position eines Ereignisses typischen Signals kein solches Positionssignal aussenden, wenn nicht nebeneinanderliegende Fotodetektoren zwei Schwellwertüberschreitungssignale aussenden.

15. Vorrichtung nach Anspruch 1, die **dadurch gekennzeichnet ist, daß** die Mittel zur Erzeugung eines Signals, das typisch für den Energiewert eines digitalisierten Impulses ist, N digitale Kodierungseinheiten (66) und Mittel (68) zur digitalen Summierung oder Ermittlung der maximalen Amplitude umfassen, die jeder digitalen Kodierungseinheit zugeordnet sind, sowie dadurch, daß die Mittel zur Erzeugung eines Schwellwertüberschreitungssignals Mittel zum Vergleich eines Ausgangssignals der Summierungsmittel mit einem voreingestellten Wert sind, und dadurch, daß die gemeinsamen Mittel der Fotodetektoren zur Abgabe eines für die Position eines Ereignisses typischen Signals mindestens einen Speicher mit Lesezugriff (76, 77) umfassen, der durch die Ausgänge der Vergleichsmittel angesprochen wird.

16. Vorrichtung nach Anspruch 15, die außerdem folgende Elemente umfaßt, die jeder digitalen Kodierungseinheit zugeordnet sind:

- Mittel (88) zur Ermittlung der temporären Position des Höchstwertes eines digitalisierten Impulses, wobei diese Mittel durch die entsprechende digitale Kodierungseinheit geregelt werden
- ein Schieberegister (90) und

- eine Tür ET (92), die vom Ausgang der Vergleichsmittel und dem Ausgang des Schieberegisters geregelt wird

17. Vorrichtung nach Anspruch 15 oder 16, die außerdem folgende Elemente umfaßt:

- analoge Summierungsmittel (98), die als Eingang die Ausgänge der N Fotodetektoren empfangen
- Mittel (104) zur Ermittlung des Höchstwertes eines Analogsignals, die durch die analogen Summierungsmittel geregelt werden
- ein Schieberegister (106), das durch die Mittel zur Ermittlung des Höchstwertes geregelt wird
- ein Register (122), das durch den Speicher mit Lesezugriff (76) und das o. g. Schieberegister (106) geregelt wird

18. Vorrichtung nach einem der Ansprüche 15 bis 17, die zwei Speicher mit Lesezugriff (76, 77) umfaßt.

19. Vorrichtung zur Ermittlung von Ereignissen, die folgende Elemente umfaßt:

- ein zweidimensionales Netz aus N Fotodetektoren
- eine Vorrichtung nach einem der Ansprüche 15 bis 18

20. Kamera mit einer Vorrichtung nach einem der Ansprüche 8 bis 13 oder 19, bei der die Fotodetektoren Fotovervielfacher sind.

21. Vorrichtung zur Bildgebung durch Gammastrahlung, die eine Kamera nach Anspruch 20 beinhaltet.

22. Verfahren zur Bearbeitung von Signalen, die durch eine Anordnung aus N Fotodetektoren (60) einer Gammakamera als Antwort auf ein Ereignis erzeugt werden, wobei das Verfahren für jeden Fotodetektor die Erzeugung eines Signals umfaßt, das typisch für den Höchstwert oder die Energie eines vom Fotodetektor abgegebenen und digitalisierten Impulses ist, und **dadurch gekennzeichnet ist, daß** es folgende Elemente umfaßt:

- die Erzeugung eines Signals bei Überschreitung eines Schwellwerts ($V_r$) für jeden Fotodetektor, wenn die Amplitude des Signals, das typisch für den Höchstwert oder die Energie eines digitalisierten Impulses ist, höher als dieser Schwellwert ist

- die Ausbildung eines Signals, das typisch für eine vermutete Position eines Ereignisses in Abhängigkeit von den Schwellwertüberschreitungssignalen ist, wobei es dank des für die angenommene Position des Ereignisses typischen Signals möglich ist, einen Bereich aus dem Feld der N Fotodetektoren zu markieren oder zu kodieren, der vom Ereignis betroffen ist, um die genaue Position dieses Ereignisses zu berechnen, und zwar mit folgendem Zweck:

- Wird nur ein einziges Schwellwertüberschreitungssignal von einem beliebigen der N Fotodetektoren geliefert, dann ist die vermutete Position die Position dieses beliebigen Fotodetektors, und:

- werden mindestens zwei Signale der Schwellwertüberschreitung von mindestens zwei nebeneinanderliegenden unter den N Fotodetektoren geliefert, dann liegt die vermutete Position zwischen den genannten nebeneinanderliegenden Fotodetektoren, deren Anzahl mindestens zwei beträgt.

23. Verfahren nach Anspruch 22, das außerdem für jeden Fotodetektor die Ermittlung der temporären Position des Höchstwertes des digitalisierten Impulses und die Verzögerung der Aussendung des Schwellwertüberschreitungssignals während einer bestimmten Zeitdauer ab dieser temporären Position umfaßt.

24. Verfahren nach einem der Ansprüche 22 oder 23, das außerdem folgende Elemente umfaßt:

- die Bildung eines analogen Gesamtsignals, das gleich der Summe der von $N_1$ Fotodetektoren gelieferten Signale ist, wobei $N_1 \leq N$ ist

- die Abgabe eines Signals, das typisch für die temporäre Position des Höchstwertes des analogen Gesamtsignals ist

- die Verzögerung der Abgabe des für die Position eines Ereignisses typischen Signals für eine bestimmte Zeitdauer ab der temporären Position des Höchstwertes des analogen Gesamtsignals

25. Verfahren nach einem der Ansprüche 22 bis 24, bei dem die Bildung des für die Position eines Ereignisses typischen Signals so erfolgt, daß dieses Signal ausschließlich von Schwellwertüberschreitungssignalen abhängt, die innerhalb eines Zeitfensters erzeugt werden, das in einem Abstand zu den einzelnen Ereignissen beginnt.

26. Verfahren nach einem der Ansprüche 22 bis 25, bei dem die Bildung des für die Position eines Ereignisses typischen Signals so erfolgt, daß das Signal nur dann ausgesendet wird, wenn alle Schwellwertüberschreitungssignale nebeneinanderliegenden oder zusammenhängenden Fotodetektoren zugeordnet werden können.

27. Verfahren nach einem der Ansprüche 22 bis 26, das außerdem für jeden Fotodetektor (60) eine Phase umfaßt, in der ein vom Fotodetektor (60) abgegebener Impuls digitalisiert wird, wobei die Digitalisierung nach einem bestimmten Schritt p erfolgt.

28. Verfahren nach Anspruch 27, bei dem jedes Schwellwertüberschreitungssignal während einer Zeitdauer ausgesendet wird, die größer/gleich 3p ist.

29. Verfahren zur Ermittlung von Ereignissen im Verhältnis zu einem zweidimensionalen Netz aus N Fotodetektoren (60), die eine Ebene bilden, wobei jedem Fotodetektor Digitalisierungsmittel (66) zugeordnet sind und dieses Verfahren ein Signalbearbeitungsverfahren nach einem der Ansprüche 22 bis 26 umfaßt.

30. Verfahren nach Anspruch 29, bei dem das für die Position eines Ereignisses typische Signal aus einer ersten und einer zweiten Komponente besteht, wobei jede dieser Komponenten einer Koordinate des erfaßten Ereignisses in der Ebene des zweidimensionalen Fotodetektometzes entspricht.

31. Verfahren nach einem der Ansprüche 22 bis 30, bei dem die Bildung des für die Position eines Ereignisses typischen Signals so erfolgt, daß kein Positionssignal gebildet oder abgesendet wird, wenn von nicht nebeneinanderliegenden Fotodetektoren zwei Schwellwertüberschreitungssignale gesendet werden.

32. Bildgebendes Verfahren mit Korrektur der Abschwächung durch Übertragung, wobei das Verfahren nach Anspruch 31 umgesetzt wird.

33. Äquivalentes bildgebendes Verfahren mit PET, bei dem das Verfahren nach Anspruch 31 angewendet wird.

FIG. 1

FIG. 2B

FIG. 2A

FIG. 3

FIG. 5

EP 0 937 265 B1

FIG. 4 A

FIG. 4B

FIG. 6

FIG. 7

EP 0 937 265 B1

FIG. 8

FIG. 9A

$L_3$

$L_2$

$\underline{60}_3$   $\underline{60}_2$   $\underline{60}_1$   $L_1$

$C_4$   $C_3$   $C_2$   $C_1$

FIG. 9B

60-k   60-j

60-i

60-l

$L_3$

60-h

60-g

$L_2$

60-e

60-f

$L_1$

60-d

60-a   60-c   60-b

$C_4$   $C_3$   $C_2$   $C_1$

$C_1$   $P_1$   $C_2$   $P_2$   $C_3$   $P_3$   $C_4$

1   2   3   4   5   6   7   8   9

X

FIG. 10

FIG. 11A

FIG. 11B